# EUROPÄISCHE PATENTSCHRIFT

(11) **EP 2 780 735 B1**
(45) Veröffentlichungstag und Bekanntmachung des Hinweises auf die Patenterteilung: **03.02.2016**
(21) Anmeldenummer: 12772282.5
(22) Anmeldetag: 04.10.2012
(51) Int. Cl.: G01S 7/527, G01S 15/93, G01S 15/10

(54) **VERFAHREN UND VORRICHTUNG ZUR ERFASSUNG DES UMFELDES EINES BEWEGUNGSHILFSMITTELS, INSBESONDERE EINES FAHRZEUGES**
METHOD AND DEVICE FOR DETECTING THE ENVIRONMENT OF A MOVEMENT AID, IN PARTICULAR FOR A VEHICLE
PROCÉDÉ ET DISPOSITIF SERVANT À APPRÉHENDER L'ENVIRONNEMENT D'UN AUXILIAIRE DE DÉPLACEMENT, EN PARTICULIER D'UN VÉHICULE

(30) Priorität: 16.11.2011 DE 102011086431
(43) Veröffentlichungstag der Anmeldung: 24.09.2014
(73) Patentinhaber: Robert Bosch GmbH, 70442 Stuttgart (DE)
(72) Erfinder: KLOTZ, Albrecht, 71229 Leonberg (DE); SCHMID, Dirk, 75397 Simmozheim (DE); SCHUMANN, Michael, 70597 Stuttgart (DE)
(86) Internationale Anmeldenummer: PCT/EP2012/069571
(87) Internationale Veröffentlichungsnummer: WO 2013/072129

(56) Entgegenhaltungen:
- WO-A1-2008/147223
- US-A1- 2002 023 498
- US-A1- 2009 254 260
- US-A1- 2011 087 342

## Beschreibung

### Bereich der Erfindung

Die vorliegende Erfindung betrifft ein Verfahren zum Bestimmen der Position und/oder der Bewegung mindestens eines Objektes in der Umgebung eines Bewegungshilfsmittels, insbesondere eines Fahrzeuges, mittels mindestens eines an dem Objekt reflektierten und empfangenen, als Echosignal bezeichneten akustischen Signals, das von dem empfangenden Elektro-Akustik-Wandler gesendet wird. Auch betrifft die Erfindung eine Umfelderfassungsvorrichtung zum Durchführen des erfindungsgemäßen Verfahrens und ein Fahrzeug mit einer erfindungsgemäßen Umfelderfassungsvorrichtung.

### Stand der Technik

Ultraschallbasierte Messsysteme werden eingesetzt, um einen Abstand zu einem vor einem Ultraschallsensor befindlichen Objekt zu messen. Die eingesetzten Ultraschallsensoren basieren in der Regel auf einem bekannten Puls-Echo-Verfahren. In dieser Betriebsart sendet der Ultraschallsensor mittels eines Elektro-Akustik-Wandlers einen Ultraschallpuls aus und misst die durch ein Objekt hervorgerufene Reflexion des Ultraschallpulses, die als Echopuls bezeichnet wird. Der Abstand zwischen dem Sensor und dem Objekt errechnet sich aus der gemessenen Laufzeit des Echos und aus der Schallgeschwindigkeit. Dabei ist die Sendefrequenz des Elektro-Akustik-Wandlers auf die Resonanzfrequenz des Wandlers abgestimmt.

Zur Objektabstandsbestimmung wird insbesondere das analoge Messsignal des Elektro-Akustik-Wandlers, das aus einem empfangenen Echopuls erzeugt wird, so ausgewertet, dass ein gültiger Echopuls genau dann detektiert wird bzw. vorliegt, wenn die gemessene Spannung des Messsignals einen vorbestimmten Schwellwert für eine festgelegte Mindestdauer überschreitet. Eine solche Detektion eines empfangenen Echopuls ist auch in dem Dokument DE 102 009 002 870 A1 erwähnt.

Aufgrund des resonanten Charakters des Elektro-Akustik-Wandlers kommt es bei der Sendeanregung zu Ein- und Ausschwingvorgängen. Insbesondere die Ausschwingvorgänge führen zu einer Totzeit, während der die empfangenen Echopulse nicht detektiert werden können. Diese Totzeit ist gleichbedeutend mit einer minimalen Reichweite des Sensors. Mit anderen Worten, es können Objekte, die sich in einem einen minimalen Abstandswert unterschreitenden Abstand zu dem Sensor befinden, nicht mittels dieses Sensors detektiert werden.

Aus dem Dokument WO 2008/147223 A1 ist ein Verfahren zur Bestimmung von Abständen eines Objektes zu einer Ultraschallabstandsmessvorrichtung bekannt, wobei die Ultraschallabstandsmessvorrichtung ein Elektro-Akustik-Wandler aufweist, mittels dem Ultraschallsignale gesendet werden. Mittels desselben Elektro-Akustik-Wandlers werden die als Einfachechosignale oder Mehrfachechosignale auftretende Echosignale, die sowohl aus Einfachreflektionen als auch aus Mehrfachreflektionen der gesendeten Ultraschallsignale an dem Objekt stammen, detektiert und zur Bestimmung des aktuellen Objektabstandes ausgewertet. Dabei wird nach dem Senden der Ultraschallsignale eine Nachschwingdauer des Elektro-Akustik-Wandlers gemessen und mit einer bekannten Nachschwingdauer des Elektro-Akustik-Wandlers verglichen. Bei Vorliegen einer gemessenen Nachschwingdauer, die mit der bekannten Nachschwingdauer übereinstimmt, werden die zuerst detektierten Echosignale als Einfachechosignale erkannt und zur Bestimmung des aktuellen Objektabstandes ausgewertet. Bei Vorliegen einer gegenüber der bekannten Nachschwingdauer längeren gemessenen Nachschwingdauer wird das Eintreffen der Einfachechosignale innerhalb der gemessenen Nachschwingdauer erkannt und bei der Bestimmung des aktuellen Objektabstandes mittels detektierter Echosignale berücksichtigt.

Ferner ist aus dem Dokument US 2002/0023498 A1 ein Hinderniserfassungssystem für Fahrzeuge bekannt, bei dem Ultraschallsignale mittels eines Ultraschallsensors gesendet werden und nach ihrer Reflektion an den Umgebungshindernissen mittels desselben Ultraschallsensors empfangen werden. Um eine Ablagerung von Schnee auf dem Ultraschallsensor feststellen zu können, wird dabei eine aktuelle Nachschwingdauer des Ultraschallsensors gemessen und mit einer bekannten Nachschwingdauer dieses Ultraschallsensors verglichen.

### Offenbarung der Erfindung

Erfindungsgemäß wird ein Verfahren zum Bestimmen der Position und/oder der Bewegung mindestens eines Objektes in der Umgebung eines Bewegungshilfsmittels, insbesondere eines Fahrzeuges, mittels mindestens eines an dem Objekt reflektierten und empfangenen, als Echosignal bezeichneten akustischen Signals bereitgestellt, wobei das empfangene akustische Signal von dem empfangenden Elektro-Akustik-Wandler gesendet wurde. Dabei wird nach dem Senden des akustischen Signals eine Nachschwingdauer des sendenden Elektro-Akustik-Wandler gemessen. Beim Vorliegen einer Übereinstimmung zwischen der gemessenen Nachschwingdauer und einer bekannten Nachschwingdauer des Elektro-Akustik-Wandlers wird das zuerst detektierte Echosignal als das erste, aus einer einzelnen Reflexion des gesendeten akustischen Signals an dem Objekt stammende Echosignal erkannt, und aus der Laufzeit des zuerst detektierten Echosignals wird der Objektabstand bestimmt. Beim Vorliegen einer gemessenen, gegenüber der bekannten Nachschwingdauer längeren Nachschwingdauer wird die Laufzeit des empfangenen, ersten Echosignals und dadurch auch den Objektabstand aus der Differenz zwischen der gemessenen und der bekannten Nachschwingdauer der Dauer des ersten Echosignals abgeschätzt. Bei dem erfindungsgemäßen Verfahren wird eine Änderung der Empfindlichkeit eines den Elektro-Akustik-Wandler umfassenden Empfangspfades mittels einer zur Erkennung des mindestens einen Objektes verwendeten Auswertung von Kamerabildern der Umgebung des Bewegungshilfsmittels getriggert. Dabei wird die Empfindlichkeit des Empfangspfades dahin geändert, dass diese zur Erhöhung der Detektionswahrscheinlichkeit von Einfachechosignalen oder Mehrfachechosignalen erhöht und/oder zur Erhöhung der Detektionsstabilität von detektierten Einfachechosignalen oder Mehrfachechosignalen erniedrigt wird.

Erfindungsgemäß wird ferner eine Umfelderfassungsvorrichtung zum Durchführen des erfindungsgemäßen Verfahrens bereitgestellt. Die erfindungsgemäße Umfelderfassungsvorrichtung umfasst einen Elektro-Akustik-Wandler zum Empfangen mindestens eines mittels des Elektro-Akustik-Wandlers gesendeten, an mindestens einem Objekt in der Umgebung eines Bewegungshilfsmittels reflektierten, als Echosignal bezeichneten akustischen Signals. Ferner umfasst die Umfelderfassungsvorrichtung eine Auswerteeinrichtung, die dazu ausgebildet ist, zur Bestimmung der Position und/oder der Bewegung des Objektes die Dauer des nach dem Senden des akustischen Signals nachfolgenden Nachschwingens des sendenden Elektro-Akustik-Wandler zu messen. Die Auswerteeinrichtung ist weiterhin dazu ausgebildet, beim Vorliegen einer Übereinstimmung zwischen der gemessenen Nachschwingdauer und der bekannten Nachschwingdauer des Elektro-Akustik-Wandlers das zuerst detektierte Echosignal als das erste, aus einer einzelnen Reflexion des gesendeten akustischen Signals an dem Objekt stammende Echosignal zu erkennen, und aus der Laufzeit des zuerst detektierten Echosignals der Objektabstand zu bestimmen. Des Weiteren ist die Auswerteeinheit dazu ausgebildet, beim Vorliegen einer gemessenen, gegenüber der bekannten Nachschwingdauer längeren Nachschwingdauer die Laufzeit des empfangenen, ersten Echosignals und dadurch auch den Objektabstand einer aus der Differenz zwischen der gemessenen und der bekanten Nachschwingdauer berechneten Überlappungszeit zwischen dem Nachschwingsignal und dem ersten Echosignal abzuschätzen. Weiterhin umfasst die Umfelderfassungsvorrichtung eine Kamera und eine Steuereinrichtung, die dazu ausgebildet ist, zur Erhöhung der Detektionswahrscheinlichkeit von Einfachechosignalen oder Mehrfachechosignalen die Empfindlichkeit eines den Elektro-Akustik-Wandler umfassende Empfangspfades zu erhöhen und/oder zur Erhöhung der Detektionsstabilität von detektierbaren Einfachechosignalen oder detektierbaren Mehrfachechosignalen die Empfindlichkeit des Empfangspfades (EK1) zu erniedrigen und die Änderung der Empfindlichkeit des Empfangspfades mittels einer zur Erkennung des mindestens einen Objektes verwendeten Auswertung von mittels der Kamera aufgenommenen Bildern der Umgebung des Bewegungshilfsmittels zu triggern.

Die Unteransprüche zeigen bevorzugte Weiterbildungen der Erfindung.

Mittels des erfindungsgemäßen Verfahrens wird der Abstand zwischen einem Objekt und einem Sensor indirekt gemessen. Dabei wird anhand der Überlagerungszeit zwischen dem Nachschwingsignal und dem aus dem Echosignal erzeugten Messsignal die Verlängerung der Sättigungs- und der Totzeit durch einfache Mittel gemessen und ausgewertet.

Mittels des erfindungsgemäßen Verfahrens wird die minimale Reichweite eines Ultraschallsensors verringert. Dadurch wird der Fahrer des Bewegungshilfsmittels, insbesondere des Fahrzeuges, genauer über den Abstand von Hindernissen im Nahbereich des Sensors, insbesondere des Ultraschallsensors, informiert.

Bei einer besonders vorteilhaften Ausführungsform der Erfindung wird, wenn mindestens ein weiteres Mehrfachechosignal, das aus einer entsprechenden Mehrfachreflexion des gesendeten akustischen Signals an dem Objekt stammt, detektiert wird, die Laufzeit des Mehrfachechosignals und/oder mindestens eine Differenz zwischen den Empfangsbeginnzeitpunkten von zwei detektierten, insbesondere aufeinanderfolgenden, Mehrfachechosignalen berechnet, zur entsprechenden Bestimmung des Objektabstandes. Dabei wird der mittels des detektierten Mehrfachsignals bestimmte Objektabstand zur Plausibilisierung oder zur Bestimmung des mittels des ersten Echosignals bestimmten oder mittels der Differenz zwischen der gemessenen und der normalen Nachschwingdauer abgeschätzten Objektabstands verwendet.

Bei sehr nahen Objekten kommt es aufgrund von Mehrfachreflexionen des gesendeten Ultraschallpulses zu einem Auftreten von Mehrfachechopulsen, die eine Laufzeit aufweisen, mittels der ein entsprechendes Vielfaches des Objektabstandswertes direkt berechnet werden kann. Die Echopulse, die aus der ersten Reflexion der gesendeten Ultraschallspulse an einem Objekt stammen, das sich in einem geringen Abstand von beispielsweise unter 20 cm gegenüber dem empfangenden Sensor befindet, können vom Ausschwingen des Elektro-Akustik-Wandlers des empfangenden Sensors oft nicht getrennt werden. Der reale Objektabstandswert ergibt sich als Differenz der Ankunftszeitpunkte von aufeinanderfolgenden Echopulsen.

Durch die Kombination der Auswertung der Verlängerung der Sättigungs- oder Totzeit (Ausschwingdauer oder Nachschwingdauer) des empfangenden Elektro-Akustik-Wandlers und der erläuterten Auswertung der Mehrfachechopulse lässt sich eine indirekte und auch genauere Messung des realen Objektabstandes erzielen.

Bei dem erfindungsgemäßen Verfahren wird zur Erhöhung der Detektionswahrscheinlichkeit von Echosignalen, insbesondere von Mehrfachechosignalen, die Empfindlichkeit eines den Elektro-Akustik-Wandler umfassenden Empfangspfades vorzugsweise in mehreren Schritten erhöht.

Insbesondere wird, wenn eine verlängerte Nachschwingdauer vorhanden ist beziehungsweise gemessen wird und wenn zunächst kein Mehrfachecho detektiert wird, die Empfindlichkeit des Empfangspfads erhöht. Wird dann ein Mehrfachecho detektiert, wird der Objektabstand durch die erfindungsgemäße Auswertung des Mehrfachechos bestimmt.

Bei dem erfindungsgemäßen Verfahren wird zur Erhöhung der Detektionsstabilität von detektierbaren Echosignalen, insbesondere von detektierbaren Mehrfachechosignalen, die Empfindlichkeit des Empfangspfades bevorzugt erniedrigt.

Ferner wird bei dem erfindungsgemäßen Verfahren die Änderung der Empfindlichkeit des Empfangspfades mittels einer zur Erkennung des mindestens einen Objektes verwendeten Auswertung von Kamerabildern der Umgebung des Bewegungshilfsmittels getriggert.

Mittels der erfindungsgemäße Anpassung der Empfindlichkeit des den Elektro-Akustik-Wandler umfassenden Empfangspfades wird eine Reduktion der minimalen Reichweite eines einen solchen Elektro-Akustik-Wandler umfassenden Ultraschallsensors erreicht. Damit wird eine Verbesserung der Nahbereichfähigkeit und damit auch eine Verbesserung der unter Zuhilfenahme eines solchen Ultraschalsensors durchgeführten Parkfunktion erzielt.

Bei einer weiteren bevorzugten Ausführungsform der Erfindung wird die Frequenz des gesendeten akustischen Signals mittels eines Modulationssignals moduliert. Das Modulationssignal wird mit dem aus dem empfangenen Echosignal erzeugten Messsignal des Elektro-Akustik-Wandlers mittels eines im Empfangpfad vorhandenen Korrelationsfilters, insbesondere eines Optimalfilters, korreliert. Dabei wird ein entsprechendes Korrelationssignal erzeugt. Das empfangene Echosignal wird mittels einer Auswertung des mittels des Korrelationsfilters erzeugten Korrelationssignals detektiert.

Durch die Verwendung eines Korrelationsfilters, insbesondere eines Optimalfilters ("matched filter") wird eine genauere Bestimmung eines empfangenen Echosignals erzielt.

Erfindungsgemäß wird weiterhin ein Fahrzeug mit der erfindungsgemäßen Umfelderfassungsvorrichtung bereitgestellt.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen zeigen:

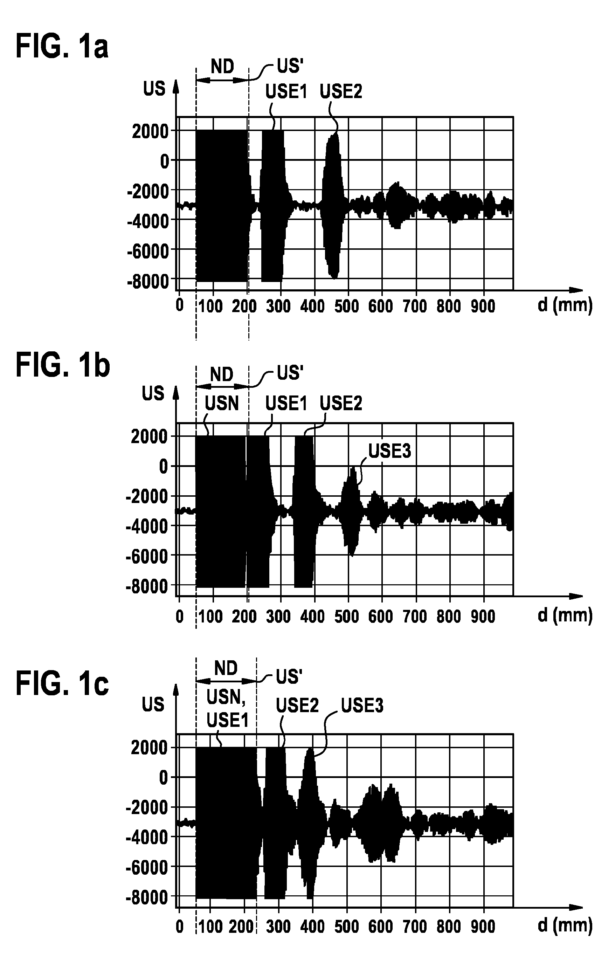

- Figuren 1a bis 1c: analoge Messsignale eines Elektro-Akustik-Wandlers, die jeweils aus einem mittels des Elektro-Akustik-Wandlers empfangenen Echosignal erzeugt werden, wobei die Echosignale jeweils aus Reflexionen eines mittels des Elektro-Akustik-Wandlers gesendeten akustischen Signals an einem gegenüber dem Elektro-Akustik-Wandler unterschiedlich beabstandeten Rohrs mit einem Durchmesser von 75 mm stammen,

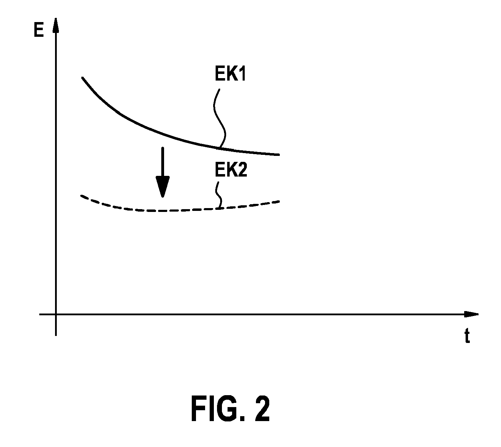

- Figur 2: zwei unterschiedliche Verläufe der Empfangspfadempfindlichkeit in Abhängigkeit von der Zeit,

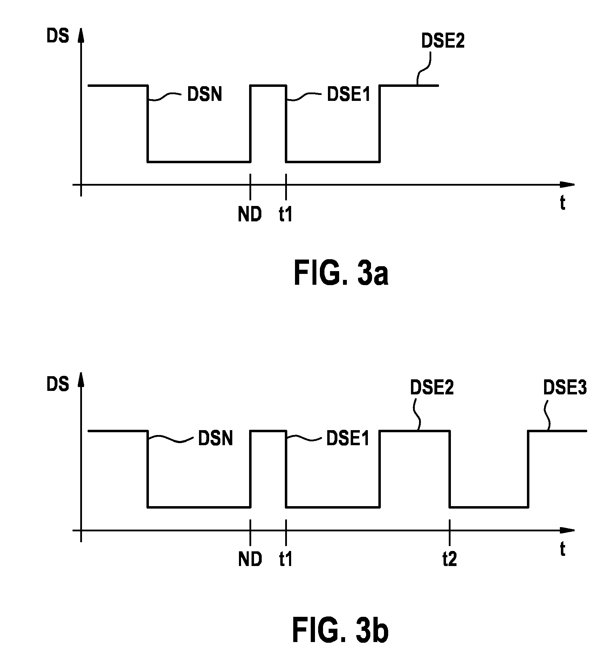

- Figur 3a und 3b: der zeitabhängige Verlauf der digitalisierten Messsignale des von dem Empfangspfad umfassten Elektro-Akustik-Wandlers bei Vorliegen der zwei unterschiedlichen Verläufe der Empfangspfadempfindlichkeit aus der Figur 2, und

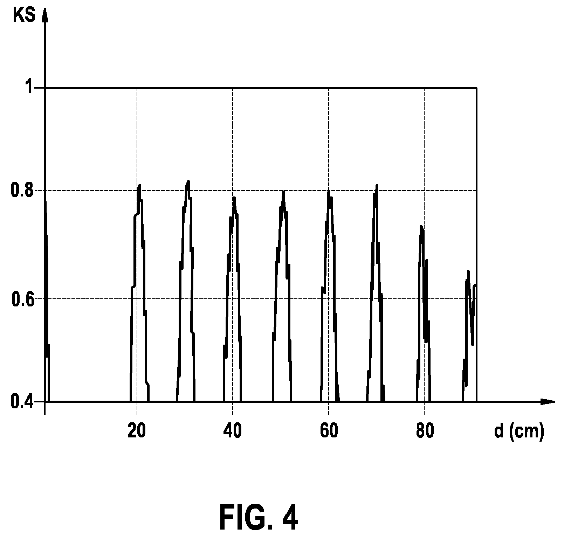

- Figur 4: die normierte Amplitude eines Korrelationssignals, das mittels eines Optimalfilters durch Korrelation eines empfangenen Echosignals oder eines empfangenen Mehrfachechosignals mit dem Modulationssignal des entsprechenden gesendeten akustischen Signals erzeugt und in Abhängigkeit von einem entsprechenden Objektabstand oder von einem entsprechenden Mehrfachen des Objektabstandes dargestellt wird.

### Ausführungsformen der Erfindung

In den Figuren 1a bis 1c sind die mittels einer erfindungsgemäßen Umfelderfassungsvorrichtung (nicht dargestellt) nach einer ersten Ausführungsform der Erfindung erzeugten analogen Messsignale eines Elektro-Akustik-Wandlers (nicht dargestellt) dargestellt, die jeweils aus einem mittels des Elektro-Akustik-Wandlers empfangenen Echosignal erzeugt werden. Die Echosignale stammen jeweils aus Reflexionen eines mittels des Elektro-Akustik-Wandlers gesendeten akustischen Signals an einem Rohr mit einem Durchmesser von 75 mm. Bei der Darstellung aus der Figur 1a liegt zwischen dem reflektierenden Rohr und dem Elektro-Akustik-Wandler ein Abstand von 20 cm, bei der Darstellung aus der Figur 1b einen Abstand von 15 cm und bei der Darstellung aus der Figur 1c einen Abstand von 10 cm vor.

Die Anregung des Elektro-Akustik-Wandlers erfolgt dabei mit konstanter Frequenz, die Detektion der Echosignale erfolgt durch Schwellenwertüberschreitung. Der gemessene Abstand wird durch die Differenz zwischen dem Startzeitpunkt des Sendepulses und dem Zeitpunkt des Überschreitens der Schwellenwertkennlinie, die mit der Schallgeschwindigkeit multipliziert wird, bestimmt. Die Bestimmung der mittels des Elektro-Akustik-Wandlers eines Sensors (nicht dargestellt) empfangenen Echosignale erfolgt mittels des erfindungsgemäßen Verfahrens, das ermöglicht, die Anwesenheit eines Objektes im Nahbereich des Sensors in einfacher Weise zu detektieren und dessen Abstand zum Sensor genau zu berechnen.

Bei typischen Sendepulslängen von 300 µs Dauer können die Echopulse, die aus Reflexionen an Objekten im Abstand von weniger als 20 cm stammen, nur schwer vom Nachschwingen getrennt werden, da die Nachschwingdauer derzeitig eingesetzten Wandler im Bereich von etwa 700 µs liegt. Objekte, die sich in Abständen kleiner als 20 cm befinden, erzeugen daher ein Echosignal, das mit dem Nachschwingsignal des sendenden Wandlers verschmilzt und mit einer reinen Amplitudediskriminierung nicht detektiert werden kann. Diese Verschmelzung äußert sich jedoch durch eine längere (detektierbare) Totzeit des Sensors. Die gemessene Totzeit des Sensors korreliert dabei mit dem Objektabstand.

Allerdings führen auch andere Umstände, wie zum Beispiel Belag auf der Sensormembran zu einem verlängerten Nachschwingen, sodass dieses Merkmal nicht zwingend einem Objekt im Nahbereich des Sensors zugeordnet werden kann. Zudem erzeugen Objekte mit unterschiedlichem Reflexionsvermögen (Reflektivitäten) auch unterschiedlich große Echosignale, die wiederum zu unterschiedlich langen Totzeiten führen. Jedoch kann dieses Merkmal jedenfalls zumindest als ein Indiz für ein mögliches Objekt im Nahbereich des Sensors gewertet werden.

Als eine weitere Größe kann das Auftreten von Mehrfachechosignalen ausgewertet werden. Objekte im Nahbereich erzeugen Mehrfachläufer des gesendeten Schallpulses, sodass bei diesen Objekten ein Auftreten von Echosignalen mit einem Vielfachabstand detektiert wird.

Das Auftreten von Mehrfachechosignalen ist abhängig vom Objektabstand. Je geringer der Abstand zwischen einem Objekt und dem Sensor ist, desto höher ist die Wahrscheinlichkeit des Auftretens von Mehrfachechosignalen.

Bei den in den Figuren 1a bis 1c dargestellten Messsignalen wurde der Verlauf der skalierten Spannung US der mittels des Wandlers aus den empfangenen Echosignalen erzeugten Messsignale in Abhängigkeit von der Zeit im Empfangskanal des Sensors gemessen. Die Zeitachse wurde in den Figuren 1a bis 1c durch eine dazu proportionale Abstandsachse d ersetzt. Der Abstand d kann beispielsweise in Millimetern angegeben werden. Auf der Abstandsachse d ist der Abstand zwischen dem Sensor und demjenigen Objekt abzulesen, welches das aus einem entsprechenden Echosignal erzeugte Messsignal hervorruft.

Sichtbar in den Figuren 1a bis 1c sind nicht die einzelnen Ultraschallschwingungen bei etwa 50 kHz, sondern die Einhüllenden der aus den empfangenen Echosignalen erzeugten Messsignale. Bedingt durch den Ansteuerungsbereich des Empfangsverstärkers werden die aus den empfangenen Echosignalen erzeugten Messsignale mit hoher Amplitude auf einen Bereich der skalierten Spannung US zwischen 8200 und 2000 (in beispielsweise mV gemessen) begrenzt. Die Begrenzung betrifft Messsignale, die aus Echosignalen von Objekten im Nahbereich von unter etwa 40 cm erzeugt werden, und das Sendesignal inklusive dem von dem Nachschwingen der Sensormembran hervorgerufenen Nachschwingsignal.

Bei den Darstellungen aus den Figuren 1a bis 1c beginnt das Sendesignal jeweils bei einem Offsetabstand von etwa 60 mm. Aus diesem Grund ist die Abstandsachse d jeweils mit einem Offsetabstand von 60 mm behaftet, der von den angegebenen Echoabständen zu subtrahieren ist.

In den Figuren 1a bis 1c verläuft die Nachschwingdauer ND jeweils zwischen der mit US kennzeichneten Ordinate und der mit US' kennzeichneten vertikalen Linie.

Bei der Darstellung gemäß der Figur 1a beträgt der Abstand zwischen dem reflektierenden Rohr (Objekt) und dem Sensor 20 cm. Aus der Figur 1a können ein erstes, dem ersten direkten Echosignal entsprechendes Messsignal USE1 und ein zweites dem Doppelläufer entsprechendes Messsignal USE2 bei doppeltem Abstand erkannt werden. Das erste Messsignal und dadurch auch das entsprechende erste Echosignal kann in diesem Fall noch gut vom Nachschwingsignal USN getrennt werden. Das Nachschwingsignal USN endet bei der Darstellung aus der Figur 1a bei etwa 16 cm.

Bei der Darstellung aus der Figur 1b beträgt der Abstand zwischen dem reflektierenden Rohr (Objekt) und dem Sensor 15 cm. Bei der Darstellung aus der Figur 1b verschmilzt das erste aus dem ersten direkten Echosignal erzeugte Messsignal USE1 mit dem Nachschwingsignal USN, und eine sichere Detektion des Objektes mittels des ersten aus dem ersten direkten Echosignal erzeugten Messsignals USE1 wird hier schwierig und ist in der Praxis auch nicht robust. Dafür zeigt sich bei der Darstellung aus der Figur 1b zusätzlich zu dem zweiten aus dem Doppelläufer erzeugten Messsignal USE2 bei 30 cm nun auch ein drittes aus einem weiteren (dritten) Mehrfachläufer erzeugtes Messsignal USE3 bei 45 cm.

Bei der Darstellung aus der Figur 1c beträgt der Abstand zwischen dem reflektierenden Rohr (Objekt) und dem Sensor 10 cm. Bei der Darstellung aus der Figur 1c verläuft das erste aus dem ersten direkten Echosignal erzeugte Messsignal USE1 in dem Bereich, in dem das Nachschwingsignal USN verläuft, wodurch die Nachschwingdauer scheinbar verlängert wird. Die Amplitude des dritten aus einem weiteren (dritten) Mehrfachläufer erzeugten Messsignals USE3 nimmt zu.

Eine kombinierte Auswertung der Merkmale kann erfindungsgemäß wie nachfolgend dargestellt aufgebaut werden.

Wenn keine verlängerte Nachschwingdauer gemessen wird, kann das zuerst detektierte Echosignal dem ersten direkten Ecosignal zugeordnet werden. Mittels des detektierten ersten Echosignals kann dann der reale Objektabstand genau gemessen werden.

Wenn weitere Mehrfachechosignale detektiert werden, können diese zur Plausibilisierung des mittels des ersten direkten Echosignals gemessenen Objektabstands verwendet werden. Dabei wird insbesondere geprüft, ob mindestens drei oder vier Mehrfachläufer mit gleicher Differenz der Ankunftszeitpunkte vorhanden sind. In diesem Fall ist nach Multiplikation mit der Schallgeschwindigkeit der wahre Objektabstand d direkt aus dieser zeitlichen Differenz berechenbar.

Wenn eine verlängerte Nachschwingdauer gemessen wird, wird der Unterschied der gemessenen Nachschwingdauer zu der normalen Nachschwingdauer berechnet, und daraus die Überlappungszeit zwischen dem ersten direkten Echosignal und dem Nachschwingsignal berechnet. Aus der Überlappungszeit kann eine Abschätzung der Eindringtiefe und damit des Beginns des nicht messbaren Echosignals abgeschätzt werden.

Wenn weitere Mehrfachechosignale detektiert werden, kann eine genaue Berechnung des Objektabstandes erfolgen.

Nur wenn mindestens ein weiteres Echosignal (Doppelechosignal) detektiert wird, wird ein Messwert für den Objektabstand herausgegeben. Dieser Messwert entspricht dem halben Abstand des Doppelechosignals beziehungsweise der mit der Schallgeschwindigkeit multiplizierten Differenz der Ankunftszeitpunkte zwischen hintereinander folgenden Mehrfachechosignalen, falls drei oder mehrere Echosignale detektiert werden. Wird kein weiteres Mehrfachechosignal detektiert, dann wird lediglich die Information "Objekt im Nahbereich < 20 cm" oder der zuletzt gemessene Objektabstand ausgegeben.

Wird eine verlängerte Nachschwingdauer gemessen und zunächst kein Mehrfachechosignal detektiert, so kann bei einer zweiten Ausführungsform der Erfindung die Empfindlichkeit des Empfangspfades insbesondere für schwach reflektierende Objekte erhöht werden, indem beispielsweise die Schwellwertkennlinie für Echosignale, die aus Reflexionen von gesendeten akustischen Signalen an Objekten stammen, die sich im Nahbereich, also in einem Abstand von maximal 50 cm vor dem Sensor befinden, abgesenkt wird. Wird bei erhöhter Empfindlichkeit des Empfangspfads nun ein Mehrfachecho detektiert, kann der Objektabstand wie oben beschrieben bestimmt werden. Die Absenkung der Kennlinie kann dabei in mehreren Schritten erfolgen.

Bei der zweiten Ausführungsform der Erfindung wird insbesondere zur Erhöhung der Detektionsstabilität von detektierbaren Echosignalen, insbesondere von detektierbaren Mehrfachechosignalen, die Empfindlichkeit des Empfangspfades erniedrigt.

In der Figur 2 ist die Empfindlichkeit E des Empfangpfades in Abhängigkeit von der Zeit t dargestellt. In der Figur 2 ist mittels einer durchgezogenen Linie ein erster zeitabhängiger Verlauf der Empfangspfadempfindlichkeit EK1 und mittels einer gestrichelten Linie ein zweiter zeitabhängiger Verlauf der Empfangspfadempfindlichkeit EK2 dargestellt. Dabei wird der erste Empfangspfadempfindlichkeitsverlauf EK1 auf den zweiten Empfangpfadempfindlichkeitsverlauf EK2 abgesenkt, um Mehrfachläufer stabiler zu detektieren. Die Absenkung des ersten Empfangpfadempfindlichkeitsverlauf EK1 auf den zweiten Empfangpfadempfindlichkeitsverlauf EK2 wird dabei mit einem Pfeil angedeutet.

In den Figuren 3a und 3b ist jeweils der Verlauf von digitalisierten Messsignalen DS des von dem Empfangspfad umfassten Elektro-Akustik-Wandlers in Abhängigkeit von der Zeit t dargestellt.

In der Figur 3a sind die digitalisierten Messsignale dargestellt, die beim Vorliegen des ersten Empfangpfadempfindlichkeitsverlauf EK1 gemessen worden sind. Ferner sind in der Figur 3b die digitalisierten Messsignale dargestellt, die gemessen worden sind, nachdem der erste Empfangpfadempfindlichkeitsverlauf EK1 auf den zweiten Empfangpfadempfindlichkeitsverlauf EK2 abgesenkt worden ist.

Die in den Figuren 3a und 3b mit DSN kennzeichnete Messsignale stellen jeweils das digitalisierte Nachschwingsignal des Elektro-Akustik-Wandlers nach dem Aussenden eines zur Umfeldetektion geeigneten akustischen Signals dar. Die in den Figuren 3a und 3b mit DSE1 gekennzeichneten Messsignale stellen jeweils das digitalisierte, aus dem ersten direkten Echosignal erzeugte Messsignal des Elektro-Akustik-Wandlers dar. Die in den Figuren 3a und 3b mit DSE2 kennzeichneten Messsignale stellen jeweils das digitalisierte, aus einem Doppelläufer erzeugte Messsignal des Elektro-Akustik-Wandlers dar. Das in der Figur 3b mit DSE3 gekennzeichnete Messsignal stellt das digitalisierte, aus einem Dreifachläufer erzeugte Messsignal des Elektro-Akustik-Wandlers dar. Das dem Dreifachläufer entsprechende digitalisierte Messsignal DSE3 ist nur in der Figur 3 zu erkennen. Damit wird die Wirkung der Erniedrigung des Empfangspfadempfindlichkeitsverlaufes von EK1 auf EK2 deutlich.

In den Figuren 3a und 3b mit ND ist jeweils die Nachschwingdauer gezeigt. Mit t1 ist in den Figuren 3a und 3b jeweils der Zeitpunkt gekennzeichnet, an dem die Messung des digitalisierten, aus dem ersten direkten Echosignals erzeugten Messsignals DSE1 abgeschlossen ist. Mit t2 ist in der Figur 3b der Zeitpunkt gekennzeichnet, an dem die Messung des digitalisierten, aus dem Doppelläufer erzeugten Messsignals DSE2 abgeschlossen ist.

Mit anderen Worten, es wird die Sensorempfindlichkeit im Nahbereich angepasst, das heißt erniedrigt, um insbesondere Mehrfachläufer stabiler zu detektieren. Die detektierten Mehrfachläufer werden bezüglich des Objektabstandes quantitativ ausgewertet.

Bei einer dritten vorteilhaften Ausführungsform der Erfindung werden statt einer Ansteuerung mit einer konstanten Frequenz ein frequenzmoduliertes Sendesignal im Signalzweig erzeugt und ein Optimalfilter ("matched filter") (nicht dargestellt) im Empfangspfad verwendet.

In der Figur 4 ist die normierte Amplitude eines Korrelationssignals KS dargestellt, das mittels des Optimalfilters durch die Korrelation eines empfangenen Echosignals oder eines empfangenen Mehrfachechosignals mit dem Modulationssignal des entsprechenden gesendeten akustischen Signals erzeugt wird. Das Korrelationssignal KS wird in Abhängigkeit von dem der Laufzeit des empfangenen Echosignals oder des empfangenen Mehrfachechosignals entsprechenden Objektabstand oder Mehrfachobjektabstand d dargestellt. Der die Abszisse darstellende entsprechende Abstand d wird beispielsweise in Zentimetern gemessen.

In Figur 4 ist das Auftreten von Mehrfachläufern dargestellt, die aus der Reflexion eines frequenzmodulierten gesendeten akustischen Signals an einer Wand stammen, die sich in einem Abstand von 10 cm vor dem Sensor befindet. Spitzen beziehungsweise Maxima des normierten Korrelationssignals KS entsprechen dem Auftreten von Echosignalen, insbesondere von Mehrfachechosignalen.

Durch das Optimalfilter kann eine Pulskompression erzielt werden, mittels der die aus den Echosignalen erzeugten, gefilterten Messsignale kürzer in der Zeit erscheinen und damit besser separierbar werden. Zudem lassen sich über die Maximadetektion auch die Empfangszeitpunkte der entsprechenden Echosignale genauer bestimmen.

Bei der herkömmlichen Detektion von Echosignalen mittels einer Schwellenwertkennlinie entspricht der Ankunftszeitpunkt eines Echosignals dem Zeitpunkt des Überschreitens der Schwellenwertkennlinie. Dieser Zeitpunkt wird als Beginn des Echosignals interpretiert. Damit existiert eine Abhängigkeit zwischen der Höhe (Amplitude) eines Echosignals, die von dem Reflexionsvermögen (Reflektivität) des reflektierenden Objektes und dem gesetzten Schwellenwert abhängig ist. Je höher die Schwellenwertkennlinie gewählt wird, desto später wird die Überschreitung des Schwellenwerts durch das Echosignal detektiert und desto größer wird der dadurch bestimmte Abstand zwischen dem Sensor und dem reflektierenden Objekt. Für größere Objektabstände spielt dieser Sachverhalt keine Rolle, da der prozentuale Fehler gering ist. Für Objektabstände unter 20 cm bedeuten diese Unsicherheiten im Bereich der Wellenlänge der akustischen Signale, die etwa 7 mm beträgt, schon einen beträchtlichen Fehler.

## Patentansprüche

1. Verfahren zum Bestimmen der Position und/oder der Bewegung mindestens eines Objektes in der Umgebung eines Bewegungshilfsmittels, insbesondere eines Fahrzeuges, mittels mindestens eines an dem Objekt reflektierten und empfangenen, als Echosignal bezeichneten akustischen Signals, das von dem empfangenen Elektro-Akustik-Wandler gesendet wird, wobei nach dem Senden des akustischen Signals eine Nachschwingdauer (ND) des Elektro-Akustik-Wandlers gemessen wird und beim Vorliegen einer Übereinstimmung zwischen der gemessenen Nachschwingdauer (ND) und einer bekannten Nachschwingdauer des Elektro-Akustik-Wandlers das zuerst detektierte Echosignal (USE1) als das erste, aus einer einzelnen Reflexion des gesendeten akustischen Signals an dem Objekt stammende Echosignal erkannt wird und aus der Laufzeit des zuerst detektierten Echosignals (USE1) der Objektabstand (d) bestimmt wird und beim Vorliegen einer gemessenen, gegenüber der bekannten Nachschwingdauer längeren Nachschwingdauer (ND) die Laufzeit des empfangenen, ersten Echosignals und dadurch auch der Objektabstand (d) aus der Differenz zwischen der gemessenen und der bekannten Nachschwingdauer des ersten Echosignals abgeschätzt wird, **dadurch gekennzeichnet, dass** eine Änderung der Empfindlichkeit eines den Elektro-Akustik-Wandler umfassenden Empfangspfades (EK1), die zur Erhöhung der Detektionswahrscheinlichkeit von Einfachechosignalen oder Mehrfachechosignalen erhöht und/oder zur Erhöhung der Detektionsstabilität von detektierten Einfachechosignalen oder Mehrfachechosignalen erniedrigt wird, mittels einer zur Erkennung des mindestens einen Objektes verwendeten Auswertung von Kamerabildern der Umgebung des Bewegungshilfsmittels getriggert wird.

2. Verfahren nach Anspruch 1, **dadurch gekennzeichnet, dass** zur Erhöhung der Detektionswahrscheinlichkeit von Echosignalen, insbesondere von Mehrfachechosignalen, die Empfindlichkeit des Empfangspfades (EK1) in mehreren Schritten erhöht wird.

3. Verfahren nach Anspruch 1 oder 2, **dadurch gekennzeichnet, dass** wenn mindestens ein weiteres Mehrfachechosignal, das aus einer ensprechenden Mehrfachreflexion des gesendeten akustischen Signals an dem Objekt stammt, detektiert wird, die Laufzeit des detektierten Mehrfachechosignals (USE2, USE3) und/oder mindestens eine Differenz zwischen den Empfangsbeginnzeitpunkten von zwei detektierten, insbesondere aufeinanderfolgenden, Mehrfachechosignalen (USE2, USE3) zur entsprechenden Bestimmung des Objektabstandes (d) berechnet wird, wobei der mittels des detektierten Mehrfachechosignals (USE2, USE3) bestimmte Objektabstand zur Plausibilisierung oder zur Bestimmung des mittels des ersten Echosignals bestimmten oder mittels der verlängerten Nachschwingdauer (ND) abgeschätzten Objektabstands (d) verwendet wird.

4. Verfahren nach einem der vorangehenden Ansprüche, **dadurch gekennzeichnet, dass** das gesendete akustische Signal mittels eines Modulationssignals frequenzmoduliert wird, das Modulationssignal mit dem aus dem empfangenen Echosignal erzeugten Messsignal (USE1, USE2, USE3) des Elektro-Akustik-Wandlers mittels eines Korrelationsfilters, insbesondere eines Optimalfilters, zur Erzeugung eines entsprechenden Korrelationssignal (KS) korreliert wird und das empfangene Echosignal mittels einer Auswertung des mittels der Korrelationsfilters erzeugten Korrelationssignals (KS) detektiert wird.

5. Umfelderfassungsvorrichtung zum Durchführen des Verfahrens nach einem der vorangehenden Ansprüchen, umfassend einen Elektro-Akustik-Wandler zum Empfangen mindestens eines mittels des Elektro-Akustik-Wandlers gesendeten, an mindestens einem Objekt in der Umgebung eines Bewegungshilfsmittels reflektierten, als Echosignal bezeichneten akustischen Signals, eine Auswerteeinrichtung, die dazu ausgebildet ist, zur Bestimmung der Position und/oder der Bewegung des Objektes die Dauer des nach dem Senden des akustischen Signals nachfolgende Nachschwingens des Elektro-Akustik-Wandlers zu messen und beim Vorliegen einer Übereinstimmung zwischen der gemessenen Nachschwingdauer (ND) und dem bekannten Nachschwingdauer des Elektro-Akustik-Wandlers das zuerst detektierte Echosignal (USE1) dem ersten Echosignal, der aus einer einzelnen Reflexion des gesendeten akustischen Signals an dem Objekt stammt, zuzuordnen und aus der Laufzeit des zuerst detektierten Echosignals (USE1) den Objektabstand (d) zu bestimmen und beim Vorliegen einer gemessenen, gegenüber der bekannten Nachschwingdauer längeren Nachschwingdauer (ND) die Laufzeit des empfangenen, ersten Echosignals und dadurch auch den Objektabstand (d) mittels einer aus der Differenz zwischen der gemessenen (ND) und der bekannten Nachschwingdauer berechneten Überlappungszeit zwischen dem Nachschwingsignal (USN) und dem aus dem ersten Echosignals mittels des Elektro-Akustik-Wandlers erzeugten Messsignal (USE1) abzuschätzen, **dadurch gekennzeichnet dass** die Umfelderfassungsvorrichtung weiter eine Kamera und eine Steuereinrichtung umfasst, wobei die Steuereinrichtung dazu ausgebildet ist, zur Erhöhung der Detektionswahrscheinlichkeit von Einfachechosignalen oder Mehrfachechosignalen die Empfindlichkeit eines den Elektro-Akustik-Wandler umfassende Empfangspfades (EK1) zu erhöhen und/oder zur Erhöhung der Detektionsstabilität von detektierbaren Einfachechosignalen oder detektierbaren Mehrfachechosignalen die Empfindlichkeit des Empfangspfades (EK1) zu erniedrigen und die Änderung der Empfindlichkeit des Empfangspfades (EK1) mittels einer zur Erkennung des mindestens einen Objektes verwendeten Auswertung von mittels der Kamera aufgenommenen Bildern der Umgebung des Bewegungshilfsmittels zu triggern.

6. Umfelderfassungsvorrichtung nach Anspruch 5, **dadurch gekennzeichnet, dass** die Steuereinrichtung weiter dazu ausgebildet ist, zur Erhöhung der Detektionswahrscheinlichkeit von Echosignalen, insbesondere von Mehrfachechosignalen, die Empfindlichkeit des Empfangspfades (EK1) in mehreren Schritten zu erhöhen.

7. Umfelderfassungsvorrichtung nach einem der Anspüche 5 oder 6, **dadurch gekennzeichnet, dass** die Auswerteeinrichtung dazu ausgebildet ist, die Laufzeit mindestens eines detektierten Mehrfachechosignals (USE2, USE3) und/oder mindestens eine Differenz zwischen den Empfangsbeginnzeitpunkten von zwei detektierten, insbesondere aufeinanderfolgenden, Mehrfachechosignalen (USE2, USE3) zur Bestimmung des Objektabstandes (d) zu berechnen, wobei die Auswerteeinheit weiter dazu ausgebildet ist, den mittels des detektierten Mehrfachsignals (USE2, USE3) bestimmten Objektabstand (d) zur Plausibilisierung oder zur Bestimmung des mittels des ersten Echosignals bestimmten oder mittels der verlängerten Nachschwingdauer (ND) abgeschätzten Objektabstands (d) zu verwenden.

8. Umfelderfassungsvorrichtung nach einem der Ansprüche 5 bis 7, **dadurch gekennzeichnet, dass** die Umfelderfassungsvorrichtung eine Sendeeinrichtung umfasst, die dazu ausgebildet ist, das mittels des Elektro-Akustik-Wandlers gesendete akustische Signal mittels eines Modulationssignals bezüglich seiner Frequenz zu modulieren, und die Umfelderfassungsvorrichtung im Empfangspfad ein Korrelationsfilter, insbesondere ein Optimalfilter, umfasst, das dazu ausgebildet ist, das aus dem empfangenen Echosignal erzeugte Messsignal (USE1, USE2, USE3) des Elektro-Akustik-Wandlers mit dem Modulationssignal des gesendeten akustischen Pulses zu korrelieren und dabei ein entsprechendes Korrelationssignal (KS) zu erzeugen und der Auswerteeinrichtung bereitzustellen, die weiter dazu ausgebildet ist, das empfangene Echosignal mittels einer Auswertung des Korrelationssignals (KS) zu detektieren.

9. Fahrzeug mit einer Umfelderfassungsvorrichtung nach einem der Ansprüche 5 bis 8.

## Claims

1. Method for determining the position and/or the movement of at least one object in the environment of a movement aid, in particular of a vehicle, by means of at least one received acoustic signal which is reflected at the object, is referred to as an echo signal and is transmitted by the receiving electroacoustic transducer, wherein a post-oscillation duration (ND) of the electroacoustic transducer is measured after the transmission of the acoustic signal, and,
if there is a match between the measured post-oscillation duration (ND) and a known post-oscillation duration of the electroacoustic transducer, the echo signal (USE1) detected first is identified as the first echo signal coming from an individual reflection of the transmitted acoustic signal at the object and the object distance (d) is determined from the propagation time of the echo signal (USE1) detected first, and,
if there is a measured post-oscillation duration (ND) which is longer than the known post-oscillation duration, the propagation time of the received first echo signal and, as a result, also the object distance (d) are estimated from the difference between the measured post-oscillation duration and the known post-oscillation duration of the first echo signal,
**characterized in that** a change in the sensitivity of a receive path (EK1) comprising the electroacoustic transducer, which is increased in order to increase the detection probability of single-echo signals or multiple-echo signals and/or is reduced in order to increase the detection stability of detected single-echo signals or multiple-echo signals, is triggered by means of an evaluation of camera images of the environment of the movement aid, which evaluation is used to detect the at least one object.

2. Method according to Claim 1, **characterized in that** the sensitivity of the receive path (EK1) is increased in a plurality of steps in order to increase the detection probability of echo signals, in particular multiple-echo signals.

3. Method according to Claim 1 or 2, **characterized in that**, if at least one further multiple-echo signal coming from a corresponding multiple reflection of the transmitted acoustic signal at the object is detected, the propagation time of the detected multiple-echo signal (USE2, USE3) and/or at least one difference between the start-of-reception times of two detected, in particular successive, multiple-echo signals (USE2, USE3) is/are calculated in order to accordingly determine the object distance (d), the object distance determined using the detected multiple-echo signal (USE2, USE3) being used to check the plausibility of or to determine the object distance (d) determined using the first echo signal or estimated using the extended post-oscillation duration (ND).

4. Method according to one of the preceding claims, **characterized in that** the transmitted acoustic signal is frequency-modulated using a modulation signal, the modulation signal is correlated with the measurement signal (USE1, USE2, USE3) from the electroacoustic transducer which is generated from the received echo signal using a correlation filter, in particular a matched filter, in order to generate a corresponding correlation signal (KS), and the received echo signal is detected by evaluating the correlation signal (KS) generated using the correlation filter.

5. Environment detection apparatus for carrying out the method according to one of the preceding claims, comprising an electroacoustic transducer for receiving at least one acoustic signal which is transmitted using the electroacoustic transducer, is reflected at at least one object in the environment of a movement aid and is referred to as an echo signal, an evaluation device which is designed to measure the duration of the post-oscillation of the electroacoustic transducer following the transmission of the acoustic signal in order to determine the position and/or the movement of the object, and, if there is a match between the measured post-oscillation duration (ND) and the known post-oscillation duration of the electroacoustic transducer, to assign the echo signal (USE1) detected first to the first echo signal which comes from an individual reflection of the transmitted acoustic signal at the object and to determine the object distance (d) from the propagation time of the echo signal (USE1) detected first, and, if there is a measured post-oscillation duration (ND) which is longer than the known post-oscillation duration, to estimate the propagation time of the received first echo signal and, as a result, also the object distance (d) using an overlap time between the post-oscillation signal (USN) and the measurement signal (USE1) generated from the first echo signal using the electroacoustic transducer, which overlap time is calculated from the difference between the measured post-oscillation duration (ND) and the known post-oscillation duration, **characterized in that** the environment detection apparatus also comprises a camera and a control device, the control device being designed to increase the sensitivity of a receive path (EK1) comprising the electroacoustic transducer in order to increase the detection probability of single-echo signals or multiple-echo signals and/or to reduce the sensitivity of the receive path (EK1) in order to increase the detection stability of detectable single-echo signals or detectable multiple-echo signals, and to trigger the change in the sensitivity of the receive path (EK1) by means of an evaluation of images of the environment of the movement aid which are recorded using the camera, which evaluation is used to detect the at least one object.

6. Environment detection apparatus according to Claim 5, **characterized in that** the control device is also designed to increase the sensitivity of the receive path (EK1) in a plurality of steps in order to increase the detection probability of echo signals, in particular multiple-echo signals.

7. Environment detection apparatus according to either of Claims 5 and 6, **characterized in that** the evaluation device is designed to calculate the propagation time of at least one detected multiple-echo signal (USE2, USE3) and/or at least one difference between the start-of-reception times of two detected, in particular successive, multiple-echo signals (USE2, USE3) in order to determine the object distance (d), the evaluation unit also being designed to use the object distance (d) determined using the detected multiple signal (USE2, USE3) in order to check the plausibility of or to determine the object distance (d) determined using the first echo signal or estimated using the extended post-oscillation duration (ND).

8. Environment detection apparatus according to one of Claims 5 to 7, **characterized in that** the environment detection apparatus comprises a transmitting device which is designed to modulate the frequency of the acoustic signal transmitted using the electroacoustic transducer by means of a modulation signal, and the environment detection apparatus comprises a correlation filter, in particular a matched filter, in the receive path, which filter is designed to correlate the measurement signal (USE1, USE2, USE3) from the electroacoustic transducer which is generated from the received echo signal with the modulation signal of the transmitted acoustic pulse and to generate a corresponding correlation signal (KS) in the process and to make it available to the evaluation device which is also designed to detect the received echo signal by evaluating the correlation signal (KS).

9. Vehicle having an environment detection apparatus according to one of Claims 5 to 8.

## Revendications

1. Procédé de détermination de la position et/ou du déplacement d'au moins un objet présent dans l'environnement d'un moyen de déplacement, notamment d'un véhicule, au moyen d'au moins un signal acoustique réfléchi sur l'objet et reçu, appelé signal d'écho, envoyé par le convertisseur électro-acoustique récepteur,
dans lequel la durée de post-oscillation (ND) du convertisseur électroacoustique est mesurée et, en cas d'accord entre la durée de post-oscillation (ND) mesurée et une durée connue de post-oscillation du convertisseur électroacoustique, le signal d'écho (USE1) détecté en premier lieu est détecté comme étant le premier signal d'écho provenant d'une simple réflexion du signal acoustique émis sur l'objet et la distance (d) par rapport à l'objet est déterminée à partir du temps de parcours du signal d'écho (USE1) détecté en premier,
tandis que lorsque la durée de post-oscillation (ND) mesurée est plus longue que la durée de post-oscillation connue, le temps de parcours du premier signal d'écho reçu et donc également la distance (d) par rapport à l'objet sont estimés à partir de la différence entre la durée de post-oscillation mesurée et la durée de post-oscillation connue du premier signal d'écho,
**caractérisé en ce que**
une modification de la sensibilité d'un parcours de réception (EK1) qui comprend le convertisseur électroacoustique, qui est augmentée pour augmenter la probabilité de détection de signaux d'écho simples ou de signaux d'écho multiples et/ou est diminuée pour augmenter la stabilité de détection de signaux d'écho simples ou de signaux d'écho multiples détectés, est activée au moyen d'une évaluation, utilisée pour la détection du ou des objets, d'images caméra de l'environnement du moyen de déplacement.

2. Procédé selon la revendication 1, **caractérisé en ce que** pour augmenter la probabilité de détection de signaux d'écho et en particulier de signaux d'écho multiples, la sensibilité du parcours de réception (EK1) est augmentée en plusieurs étapes.

3. Procédé selon les revendications 1 ou 2, **caractérisé en ce que** si au moins un autre signal d'écho multiple qui provient d'une réflexion multiple correspondante du signal acoustique émis sur l'objet est détecté, le temps de parcours du signal d'écho multiple détecté (USE2, USE3) et/ou au moins une différence entre les instants de début de réception de deux signaux d'écho multiples détectée, en particulier successifs (USE2, USE3) est calculé pour déterminer en correspondance la distance (d) par rapport à l'objet, la distance par rapport à l'objet déterminée au moyen du signal d'écho multiple détecté (USE2, USE3) étant utilisée pour plausibiliser ou déterminer la distance (d) par rapport à l'objet définie au moyen du premier signal d'écho ou estimée au moyen de la durée prolongée de post-oscillation (ND).

4. Procédé selon l'une des revendications précédentes, **caractérisé en ce que** le signal acoustique émis est modulé en fréquence au moyen d'un signal de modulation, **en ce que** le signal de modulation est corrélé au signal de mesure (USE1, USE2, USE3) du convertisseur électroacoustique, formé à partir du signal d'écho reçu, au moyen d'un filtre de corrélation et en particulier d'un filtre d'optimisation, pour former un signal correspondant de corrélation (KS), et **en ce que** le signal d'écho reçu est détecté au moyen d'une évaluation du signal de corrélation (KS) formé au moyen du filtre de corrélation.

5. Ensemble de saisie de l'environnement en vue de la mise en oeuvre du procédé selon l'une des revendications précédentes, l'ensemble comprenant un convertisseur électroacoustique qui reçoit au moins un signal acoustique émis au moyen du convertisseur électroacoustique, réfléchi sur au moins un objet de l'environnement d'un moyen de déplacement et appelé signal d'écho, un dispositif d'évaluation configuré pour déterminer la position et/ou le déplacement de l'objet, en mesurant la durée de la post-oscillation du convertisseur électroacoustique qui suit l'émission du signal acoustique et, en cas de correspondance entre la durée mesurée de post-oscillation (ND) et la durée connue de post-oscillation du convertisseur électroacoustique, associer le signal d'écho (USE1) détecté en premier au premier signal d'écho qui provient d'une réflexion simple du signal acoustique émis sur l'objet, et déterminer la distance (d) par rapport à l'objet à partir du temps de parcours du signal d'écho (USE1) détecté en premier,
et lorsque la durée de post-oscillation (ND) mesurée est plus longue que la durée de post-oscillation connue, estimer le temps de parcours du premier signal d'écho reçu et donc également la distance (d) par rapport à l'objet au moyen de la durée de superposition, calculée à partir de la différence entre la durée de post-oscillation mesurée (ND) et la durée de post-oscillation connue, entre le signal de post-oscillation (USN) et le signal de mesure (USE1) formé à partir du premier signal d'écho au moyen du convertisseur électro-acoustique,
**caractérisé en ce que**
l'ensemble de saisie de l'environnement présente en outre une caméra et un dispositif de commande,
le dispositif de commande étant configuré pour augmenter la sensibilité d'un parcours de réception (EK1) qui comprend le convertisseur électro-acoustique en vue d'augmenter la probabilité de détection de signaux d'écho simples ou de signaux d'écho multiples et/ou pour abaisser la sensibilité du parcours de réception (EK1) en vue d'augmenter la stabilité de détection de signaux d'écho simples ou de signaux d'écho multiples détectables, et activer la modification de la sensibilité du parcours de réception (EK1) au moyen d'une évaluation, utilisée pour la détection du ou des objets, d'images de l'environnement du moyen de déplacement enregistrées par une caméra.

6. Ensemble de détection de l'environnement selon la revendication 5, **caractérisé en ce que** le dispositif de commande est en outre configuré pour, augmenter la sensibilité du parcours de réception (EK1) en plusieurs étapes en vue d'augmenter la probabilité de détection de signaux d'écho et en particulier de signaux d'écho multiples.

7. Ensemble de détection de l'environnement selon l'une des revendications 5 ou 6, **caractérisé en ce que** le dispositif d'évaluation est configuré pour calculer le temps de parcours d'au moins un signal d'écho multiple détecté (USE2, USE3) et/ou au moins une différence entre les instants de début de réception de deux signaux d'écho multiples détectée, en particulier successifs (USE2, USE3), pour déterminer en correspondance la distance (d) par rapport à l'objet,
l'unité d'évaluation étant en outre configurée pour utiliser la distance (d) par rapport à l'objet déterminée au moyen du signal d'écho multiple détecté (USE2, USE3) pour plausibiliser ou déterminer la distance (d) par rapport à l'objet définie au moyen du premier signal d'écho ou estimée au moyen de la durée prolongée de post-oscillation (ND).

8. Ensemble de détection de l'environnement selon l'une des revendications 5 à 7, **caractérisé en ce que** l'ensemble de détection de l'environnement comporte un dispositif d'émission configuré pour moduler la fréquence du signal acoustique émis par le convertisseur électroacoustique au moyen d'un signal de modulation, l'ensemble de détection de l'environnement comportant dans le parcours de réception un filtre de corrélation et en particulier un filtre d'optimisation configuré pour corréler au signal de modulation de l'impulsion acoustique émise le signal de mesure (USE1, USE2, USE3) du convertisseur électroacoustique, formé à partir du signal d'écho reçu, et ainsi former un signal correspondant de corrélation (KS) et le mettre à disposition du dispositif d'évaluation qui est en outre configuré pour détecter le signal d'écho reçu au moyen d'une évaluation du signal de corrélation (KS).

9. Véhicule doté d'un ensemble de détection de l'environnement selon l'une des revendications 5 à 8.
